# EUROPÄISCHE PATENTANMELDUNG

(11) **EP 1 431 252 A2**
(43) Veröffentlichungstag der Anmeldung: **23.06.2004**
(21) Anmeldenummer: 03026864.3
(22) Anmeldetag: 24.11.2003
(51) Int. Cl.: C02F 3/10, B01J 19/30

(54) **Filterelement für eine Klärvorrichtung zur biologischen Reinigung von Wasser**

(30) Priorität: 20.12.2002 DE 10259915
(71) Anmelder: Ballies, Uwe, Dr. med., 24194 Kiel (DE)
(72) Erfinder: Ballies, Uwe, Dr. med., 24194 Kiel (DE)
(74) Vertreter: Gosch, Wolf-Dietrich

(57) **Zusammenfassung**

Filterelement für eine Klärvorrichtung zur biologischen Reinigung von Wasser mit Hilfe von aeroben Mikroorganismen, das aus einer flachen, mindestens nach einer Seite offenen Schale 1 besteht, die aus einem Kunststoff gefertigt ist, dessen spezifisches Gewicht um ein geringes Maß größer als das des zu reinigenden Wassers ist.

## Beschreibung

Die Erfindung betrifft ein Filterelement für eine Klärvorrichtung zur biologischen Reinigung von Wasser mit Hilfe von aeroben Mikroorganismen.

In einer Kläranlage ist von besonderer Bedeutung, in der aeroben Reinigungsstufe den aktiven Mikroorganismen Siedlungsräume mit großer und für die Anhaftung der Mikroorganismen geeigneter Oberfläche bereitzustellen und eine gute Belüftung und Versorgung der Mikroorganismen mit Sauerstoff sicherzustellen.

Für diesen Zweck werden beispielsweise mit Stacheln besetzte kugelförmige Spritzgusskörper, Netzstrukturen, Lamellen, hängende Bänder, kleine Kugeln bis 5 mm Durchmesser mit Lochstrukturen verwendet, die jeweils von dem zu reinigenden Wasser berieselt werden. Dies hat zum einen den Nachteil, dass die Zeit, in der das Wasser mit den Filterelementen in Berührung kommt, relativ kurz ist. Darüber hinaus werden nach einer gewissen Einsatzzeit die nach dem Stand der Technik verwendeten Filterelemente durch in Wasser vorhandene Schmutzpartikel und durch Abbauprodukte der Mikroorganismen verunreinigt, so dass die Filterwirkung erheblich herabgesetzt wird. Hierdurch wird eine Grundreinigung der Anlage erforderlich, der auch viele der an den Filterelementen anhaftenden Mikroorganismen zum Opfer fallen.

Aufgabe der vorliegenden Erfindung ist es daher, ein Filterelement der eingangs genannten Art zu schaffen, das eine ständige ausreichende Sauerstoffversorgung der Mikroorganismen sicherstellt und das selbstreinigende Eigenschaften aufweist.

Diese Aufgabe wird erfindungsgemäß dadurch gelöst, dass das Filterelement aus einer flachen, mindestens nach einer Seite offenen Schale besteht, die aus einem Kunststoff gefertigt ist, dessen spezifisches Gewicht um ein geringes Maß größer als das des zu reinigenden Wassers ist.

Dieses Filterelement hat den Vorteil, dass es in einer Vielzahl in einer Kläranlage gleichsam im zu reinigenden Wasser schwebt und sich dadurch durch den Auftrieb von unter dem Rand der Schale eingefangenen Luftblasen ständig in Bewegung gehalten wird, wodurch zum einen eine intensive Sauerstoffversorgung der Mikroorganismen sichergestellt wird und zum anderen die Anhaftung von Schmutzpartikeln an den Filterelementen zuverlässig vermieden wird.

Weitere Einzelheiten der Erfindung ergeben sich aus der nachfolgenden ausführlichen Beschreibung und den beigefügten Zeichnungen in denen einige bevorzugte Ausführungsformen der Erfindung beispielsweise veranschaulicht sind.

In den Zeichnungen zeigen:
- Fig. 1:: einen Querschnitt durch ein Filterelement in Form einer einfachen Schale;
- Fig. 2:: einen Querschnitt durch ein Filterelement in Form einer Doppelschale;
- Fig. 3:: einen Querschnitt durch eine einfache Schale mit konzentrisch verlaufenden Stegen;
- Fig. 4:: einen Querschnitt durch eine Doppelschale mit konzentrisch verlaufenden Stegen und
- Fig. 5:: eine Draufsicht auf eine einfache Schale gemäß Figur 3 mit konzentrisch und radial verlaufenden Stegen.

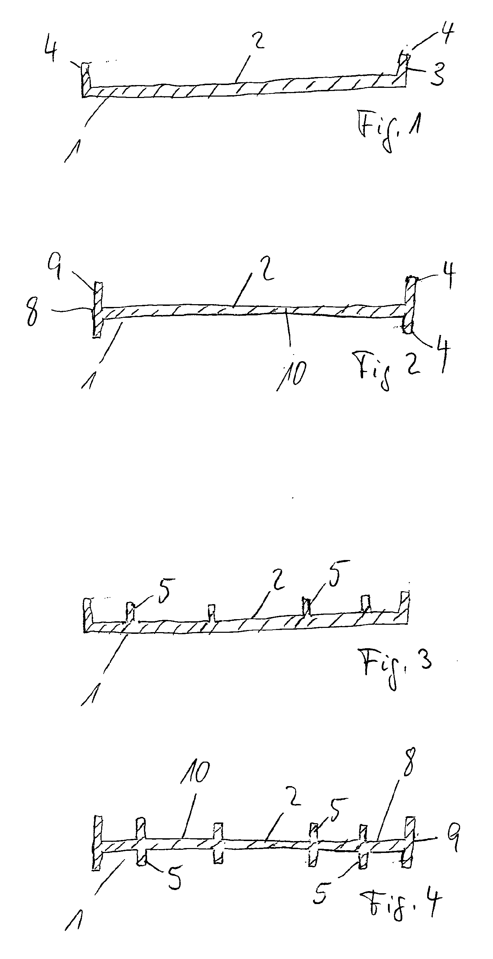

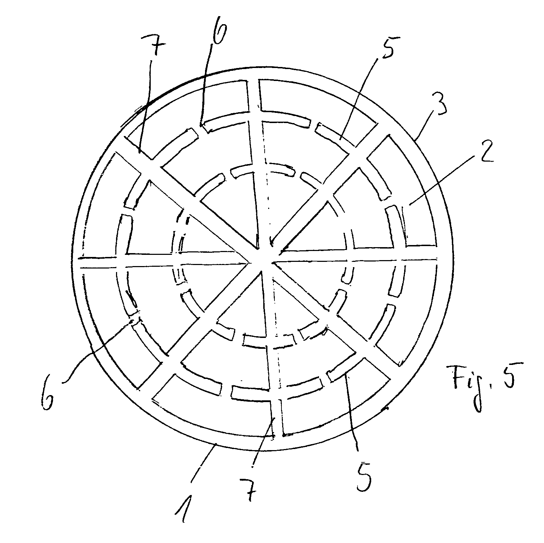

Ein Filterelement besteht aus einer flachen, mindestens nach einer Seite offenen Schale 1, die aus einem Kunststoff gefertigt ist, dessen spezifisches Gewicht um ein geringes Maß größer als das des zu reinigenden Wassers ist. Für den Fall, dass das zu reinigende Wasser Süßwasser ist, wird ein Kunststoff ausgewählt, dessen spezifisches Gewicht ≤ 1,03 ist. Für den Fall, dass Salzwasser oder Meerwasser gereinigt werden soll, wird das spezifische Gewicht des Kunststoffes eingestellt bei ≤ 1,025 bis 1,05 je nach dem Salzgehalt des zu reinigenden Wassers. Sein spezifisches Gewicht ist zwischen 0,02 bis 0,1 höher als das spezifische Gewicht eines zu reinigenden Salzwassers.

Die Schale 1 ist vorzugsweise in der Weise gestaltet, dass das Verhältnis ihrer Höhe zur Breite zwischen 1 : 4 bis 1 : 10 ist. Die Schale 1 hat einen Durchmesser zwischen 50 bis 120 mm. Sie ist mit einer rauen Oberfläche versehen. Ihr Boden 2 ist mit einem Rand 3 versehen, der eine geringe Auskragung nach außen aufweist.

Gemäß einer weiteren Ausführungsform der Erfindung kann die Schale 1 mit konzentrisch verlaufenden Stegen versehen sein, um die Oberfläche der Schale 1 zu vergrößern. Die konzentrisch verlaufenden Stege 5 weisen Unterbrechungen 6 auf, durch die von den Stegen 5 festgehaltene Luftblasen entweichen können.

Gemäß einer weiteren bevorzugten Ausführungsform der Erfindung kann die Schale 1 auch mit radial verlaufenden Stegen 7 versehen sein, um die Oberfläche der Schale 1 weitere zu vergrößern.

Die Schale 1 kann auch als Doppelschale 8 ausgebildet sein, die mit einem Rand 9 versehen ist, der ihren Boden 10 in einander abgewandten Richtungen im Sinne eines H-förmigen Schnittprofiles überragt. Auch die Doppelschale 8 kann mit konzentrischen Stegen 5 und radialen Stegen 7 versehen sein. Die Schale 1 besteht im wesentlichen aus Kunststoff-Spritzguß. Sie kann rund, eckig, quadratisch, oval oder beliebige geometrische Formen aufweisen.

Nach dem spezifischen Gewicht des zu reinigenden Wassers wird ein Kunststoff ausgewählt, aus dem die die Filterelemente bildenden Schalen 1 hergestellt werden. Dabei wird das Ziel verfolgt, dass die Filterelemente in dem zu reinigenden Wasser schweben bzw. in ruhig stehendem Wasser langsam absinken. Filterelemente werden in sehr großer Zahl in die Klärvorrichtung eingebracht und in diese wird das zu klärende Wasser entweder kontinuierlich oder diskontinuierlich eingeleitet. Bei kontinuierlicher Einleitung muss von unten Luft zugeführt werden, die sich hinter die Ränder 3, 9 der Schalen 1 bzw. Doppelschalen 8 in Blasenform anlagert und den Filterelementen einen mehr oder weniger großen Auftrieb verschaffen. Dabei verteilt sich die Luft nicht gleichmäßig innerhalb der Schale, sondern drängt in Blasenform zum Rand und erhöht an dieser Stelle den Auftrieb erheblich, so dass die Schale gedreht wird und die Luftblase nach oben entweicht, so dass ein weiteres Filterelement von dieser Luft berührt wird. Hierdurch sind die Filterelemente selbstdrehend und liegen immer in anderer Zusammensetzung neben- und übereinander. Durch das ständige Auffangen der Luftblasen wird die Sauerstoffversorgung der Mikroorganismen optimiert und dadurch, dass die Filterelemente ständig in Bewegung gehalten werden, wird eine Verschmutzung der Filterelemente und damit eine Einschränkung der Stoffwechselvorgänge bei den Mikroorganismen zuverlässig vermieden. Durch die ständige Lageveränderung der Filterelemente werden die Abbauprodukte zuverlässig entfernt und können in der Klärvorrichtung nach unten absinken, wo sie vom Boden entfernt werden können. Damit die Klärvorrichtung selbstreinigend und wartungsfrei.

Durch die raue Gestaltung der Oberflächen der Schalen 1 bzw. der Doppelschalen 8 finden die Mikroorganismen auf dem Kunststoff optimalen Halt. Die konzentrierten Stege 5 und die radialen Stege 7 dienen zur Vergrößerung der Oberfläche der Filterkörper und dazu, das Abperlen der Luftblasen zu verlangsamen. Durch die Unterbrechungen 6 in den konzentrisch angeordneten Stegen 5 kann die Luft aus den inneren Bereichen der Schalen 1, 8 nach außen entweichen, bis sie sich jeweils unterhalb des Randes 3, 9 befinden und die Drehbewegung des Filterelementes auslösen können.

Durch die geringe Auskragung 4 der Ränder 3, 9 wird das Abperlen der Luftblasen gefördert, kurz bevor ein Filterelement eine volle Drehung vollzogen hat.

Diese o.a. Eigenschaften werden auch durch regelmäßiges Einschwemmen von zu klärendem Wasser und anschließendem Ablassen in einem Behälter oder Käfig optimal erreicht; ebenso beim Eintauchen in das Wasser und Herausheben.

## Patentansprüche

1. Filterelement für eine Klärvorrichtung zur biologischen Reinigung von Wasser mit Hilfe von aeroben Mikroorganismen, **dadurch gekennzeichnet, dass** es aus einer flachen, mindestens nach einer Seite offenen Schale (1) besteht, die aus einem Kunststoff gefertigt ist, dessen spezifisches Gewicht um ein geringes Maß größer als das des zu reinigenden Wassers ist.

2. Filterelement nach Anspruch 1, **dadurch gekennzeichnet, dass** das spezifische Gewicht zur Reinigung von Süßwasser ≤ 1,003 ist.

3. Filterelement nach Anspruch 1, **dadurch gekennzeichnet, dass** bei zu reinigendem Salzwasser (Meerwasser) das spezifische Gewicht des Kunststoffes 1,025 bis 1,05 ist.

4. Filterelement nach Anspruch 1 bis 3, **dadurch gekennzeichnet, dass** sein spezifisches Gewicht zwischen 0,02 bis 0,1 höher ist als das spezifische Gewicht eines zu reinigenden Salzwassers.

5. Filterelement nach Anspruch 1 bis 4, **dadurch gekennzeichnet, dass** das Verhältnis der Höhe zur Breite der Schale (1) zwischen 1 : 4 bis 1 : 10 ist.

6. Filterelement nach Anspruch 1 bis 5, **dadurch gekennzeichnet, dass** die Schale (1) einen Durchmesser zwischen 50 bis 120 mm aufweist.

7. Filterelement nach Anspruch 1 bis 6, **dadurch gekennzeichnet, dass** die Schale (1) eine raue Oberfläche aufweist.

8. Filterelement nach Anspruch 1 bis 7, **dadurch gekennzeichnet, dass** die Schale (1) mit einem ihren Boden (2) überragenden Rand (3) versehen ist, der eine geringe Auskragung (4) nach außen aufweist.

9. Filterelement nach Anspruch 1 bis 8, **dadurch gekennzeichnet, dass** die Schale (1) mit mindestens einem konzentrisch verlaufenden Steg (5) versehen ist.

10. Filterelement nach Anspruch 1 bis 9, **dadurch gekennzeichnet, dass** eine Mehrzahl konzentrisch verlaufende Stege (5) vorgesehen sind.

11. Filterelement nach Anspruch 1 bis 10, **dadurch gekennzeichnet, dass** die konzentrischen Stege (5) Unterbrechungen (6) aufweisen.

12. Filterelement nach Anspruch 1 bis 11, **dadurch gekennzeichnet, dass** die Schale (1) radial verlaufende Stege (7) aufweist.

13. Filterelement nach Anspruch 1 bis 12, **dadurch gekennzeichnet, dass** die Schale (1) als Doppelschale (8) ausgebildet ist, die mit einem Rand 9 versehen ist, der ihren Boden (10) in einander abgewandten Richtungen im Sinne eines H-förmigen Schnittprofils überragt.

14. Filterelement nach Anspruch 1 bis 13, **dadurch gekennzeichnet, dass** es aus Kunststoff-Spritzguß besteht.

15. Filterelement nach Anspruch 1 bis 14, **dadurch gekennzeichnet, dass** es mehreckig gestaltet ist.
